# EUROPEAN PATENT APPLICATION

(11) **EP 4 647 349 A1**
(43) Date of publication of application: **12.11.2025**
(21) Application number: 25164779.8
(22) Date of filing: 19.03.2025
(51) Int. Cl.: B65B 7/16, B65B 7/28, B65B 29/02, B65B 51/14

(54) **APPARATUS AND METHOD FOR SEALING THE LID TO A CAPSULE**

(30) Priority: 25.03.2024 IT 202400006517
(71) Applicant: I.M.A. Industria Macchine Automatiche S.p.A., 40064 Ozzano dell'Emilia (BO) (IT)
(72) Inventor: BADINI, Simone, 40068 SAN LAZZARO DI SAVENA (BOLOGNA) (IT); RIVOLA, Sauro, 48027 SOLAROLO (RAVENNA) (IT)
(74) Representative: Milli, Simone

(57) **Abstract**

Described is an apparatus (1) for sealing a lid (2) to a capsule (3) containing a beverage ingredient in powder form, with said capsule (3) comprising a cup-shaped body (15) having a base (20) at one end () and a side wall (21) which extends from the base towards an opposite end which is open to form a mouth of a cup-shaped body (15) which is closed by a lid (15), the cup-shaped body (15) and the lid (2) enclosing a chamber designed to be filled with ingredients of a beverage, wherein the side wall (21) of the cup-shaped body (15) comprises a flange (5) which extends outwards to an end of the capsule distal from the base (20), protruding radially towards the outside of the chamber (4), said flange (5) having an inner ring (6A) closer to the chamber (4) and away from the side wall (21) and an outer ring (6B) furthest from the chamber (4) and coplanar with the inner ring (6A), separated by a protruding portion (7); the apparatus (1) comprising:
- a capsule housing body (8) having a housing chamber (9) configured to receive the cup-shaped body (15), and an upper annular contact portion (10) configured to support the capsule body (3) from the flange (5) when the cup-shaped body (15) is received in the housing cavity (9);
- a sealing device (11), preferably heat sealing, which is movable relative to the capsule housing body (8) between a non-operating position (P1), spaced from the capsule housing body (8), and an operating position (P2), in contact with the upper contact portion (10) of the housing body (8).

## Description

This invention relates to an apparatus and a method for sealing the lid to a capsule defined by a cup-shaped body, with said capsule containing a beverage ingredient in powder form, in particular extraction or infusion products.

There are prior art capsules for the extraction and infusion of extraction or infusion products (e.g. coffee, tea, hot beverages, etc.), having a capsule body and a lid which is sealed to the capsule body.

In these capsules, generally, the lid is sealed at the top, by means of a thermal effect sealing device, to the cup-shaped capsule body which is housed inside a housing body.

In the context of the production of capsules, an accurate sealing is required between the lid and the capsule body, in such a way as to guarantee a perfect hermetic seal and preserve, over time, the organoleptic properties of the product contained inside the capsule.

In effect, any imperfections during the sealing step determine the entrance of air/moisture into the capsule body, and therefore an incorrect adhesion of the lid to the capsule body.

Patent document WO2016075321 describes a method and an apparatus for making a capsule for beverages, wherein at least one flange of the capsule for beverages is formed from a laminated material comprising at least one layer of aluminum and one or more polymeric layers.

The lid is applied to the flange by inserting the lid and the flange between a first tool and a second tool, and pressing together the first tool and the second tool for compressing the lid and the flange.

The method described shows how to seal the lid to the capsule body both at the inner ring of the capsule body and on the outer ring of the flange of the capsule body (Fig. 9a of WO2016075321), or only at an outer ring of the flange (Fig. 7a of WO2016075321), between the inner ring and the outer ring (Figure 10a of WO2016075321).

WO2022122718 describes a method and an apparatus for sealing a lid to a capsule body. The single-dose capsule has a base element which comprises a hollow space for receiving a raw material for the beverage, and a lid of the capsule which closes the hollow space, where the base element comprises a bottom of the capsule, a peripheral flange and a wall of the capsule which extends between the bottom of the capsule and the peripheral flange.

According to this method, the lid is sealed both on the inner ring and on the outer ring of the flange in two separate steps, wherein in the first step the outer ring is sealed and in the second step the inner ring and/or the outer ring of the flange is sealed.

According to prior art apparatuses, during the process for filling the capsules with the product, there may be dispersion of coffee powder which settles on the cup-shaped body and they may soil the sealing zone, in particular the housing body, which may seriously adversely affect the quality of the sealing of the lid on the capsule body.

In these apparatuses, the coffee powder may therefore accumulate on the housing body, in particular at the zone where the capsule body rests on the housing body.

For this reason, the presence of the coffee powder on the housing body means that the correct arrangement between the capsule body and the sealing device is lost, since the ring of the cup-shaped body does not rest in the correct manner on the housing body.

In order to overcome, or at least reduce, this drawback, the housing body must be frequently cleaned in the zone where the ring of the cup-shaped body rests.

For this reason, a strongly felt need in the sector in question is that of providing an apparatus for sealing the lid to the cup-shaped body, for making a capsule, which is able to perform a high quality sealing, reducing the need for cleaning and minimising the risks of incorrect sealing of the lid to the capsule body.

The aim of this invention is therefore to overcome the above-mentioned needs and drawbacks, in particular to provide an apparatus and a method for sealing a lid to a capsule having the shape of a cup-shaped body which are able to perform a high quality sealing, reducing the need for cleaning and minimising the risks of incorrect sealing of the lid to the cup-shaped body.

Said aims are achieved by an apparatus for sealing a lid to a capsule for beverages containing a beverage ingredient in powder form.

The capsule has the shape of a cup-shaped body having a base at one end and a side wall which extends from the base towards an opposite end which is open to form a mouth of the cup-shaped body which is closed by a lid, the cup-shaped body and the lid enclosing a chamber designed to be filled with ingredients of a beverage.

The side wall of the cup-shaped body comprises a flange which extends radially and outwards at an end of the capsule distal from the base, protruding radially towards the outside of the chamber, said flange having an inner ring closer to the chamber and away from the side wall of the cup-shaped body and an outer ring further from the chamber and coplanar with the inner ring, separated by a protruding portion.

The apparatus according to the invention comprises:
- a capsule housing body configured to house said capsule body, said housing body having a housing cavity configured to receive the cup-shaped body, and an upper annular contact portion configured for supporting the capsule body from the flange when the cup-shaped body is received in the housing cavity and making contact with the upper edge of the capsule body;
- a sealing device, preferably heat sealing, which is movable relative to the capsule housing body between a non-operating position, spaced from the capsule housing body, and an operating position, in contact with the upper contact portion of the capsule housing body with said lid and said flange interposed with said capsule body interposed.

The apparatus is characterized in that the annular upper contact portion consists of a single upper annular protrusion having an engagement surface configured and sized to make contact exclusively with the inner ring of the flange of the capsule body, so that there is no free space between the inner ring of the flange and said capsule housing body, when the cup-shaped body of said capsule body is housed in the housing cavity of said housing body, and in that the capsule housing body is configured and shaped to free the outer ring from any contact with respect to said capsule housing body, in such a way that there is an annular empty space between the outer ring of the flange and said capsule housing capsule, when the cup-shaped body is housed in the housing cavity of said housing body.

The above-mentioned aims are also overcome by a method for sealing a lid to a capsule for beverages containing a beverage ingredient in powder form, the above-mentioned capsule for beverages having the shape of a cup-shaped body having a base at one end and a side wall which extends from the base towards an opposite end which is open to form a mouth of the cup-shaped body, which is closed by a lid, the cup-shaped body and the lid enclosing a chamber to be filled with the beverage ingredient, wherein the side wall of the cup-shaped body comprises a flange which extends outwards to an end of the capsule far from the base, which protrudes radially outwards from the chamber, the above-mentioned flange having an inner ring more inside the chamber and which moves away from the side wall of the cup-shaped body, and an outer ring more outside the chamber and coplanar with the inner ring, separated by a protruding portion, the method comprising the following steps:
- providing a body for housing the capsule having a housing cavity for receiving the cup-shaped body, and an upper annular coupling portion configured for supporting the body of the capsule from the flange, when the cup-shaped body is received in the housing cavity;
- providing a sealing device, preferably for heat sealing, which is movable relative to the capsule housing body;

- positioning the cup-shaped body of the capsule body inside the housing cavity of the capsule housing body;
- placing a lid on the flange of the body of the capsule to cover the chamber; then
- moving the sealing device from a non-operating position away from the capsule housing body to an operating position in contact with the upper annular coupling portion of the capsule housing body with the above-mentioned lid and the above-mentioned flange interposed between them;
- sealing the lid to the body of the capsule by means of the sealing device. The method is characterized in that the upper annular coupling portion consists of a single upper annular protrusion having a coupling face configured and sized to receive in contact only the inner ring of the flange, in such a way that there is no free space between the inner ring of the flange and the above-mentioned capsule housing body, when the cup-shaped body is received in the housing cavity of the above-mentioned housing body, wherein the step of positioning the cup-shaped body of the above-mentioned capsule body inside the housing cavity of the capsule housing body comprises the positioning exclusively of the inner ring of the flange of the above-mentioned capsule body which comes into contact with the coupling face of the upper annular protrusion of the above-mentioned upper annular coupling portion, ensuring that exclusively the inner ring of the flange is in contact with the above-mentioned upper annular protrusion, and wherein the above-mentioned upper annular protrusion is sized to come into contact only with the inner ring of the flange, when the cup-shaped body of the above-mentioned capsule body is received in the housing cavity of the above-mentioned housing body, in such a way that the external ring of the flange does not enter into contact with the above-mentioned housing body, so as to create an empty annular space between the outer ring of the flange and the above-mentioned capsule housing body, when the cup-shaped body is received in the housing cavity of the above-mentioned housing body.

The features of the apparatus according to the invention will become more apparent from the following detailed description of a preferred, non-limiting embodiment of it, illustrated by way of example in the accompanying drawings, in which:

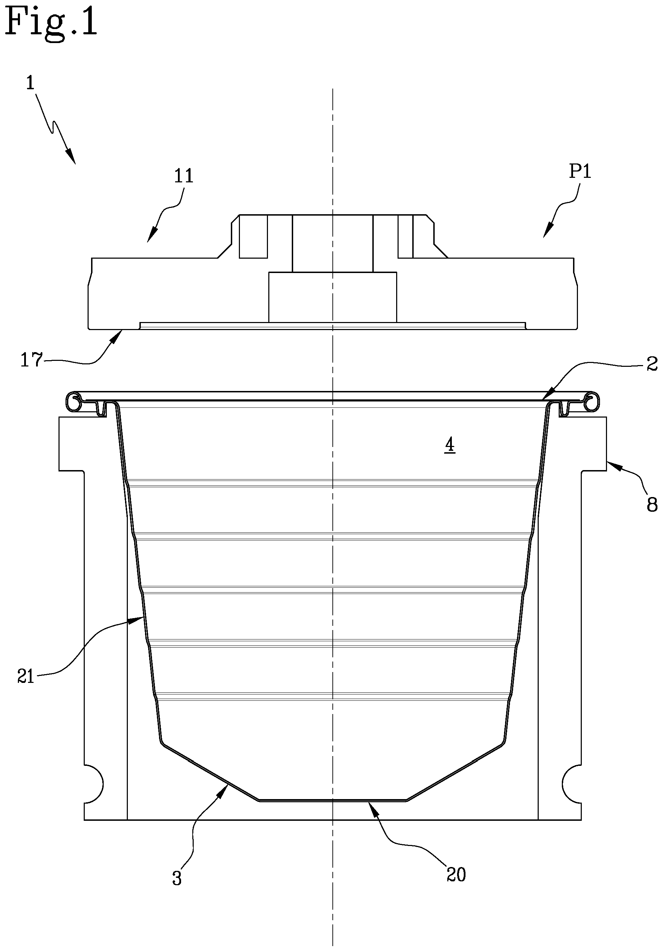

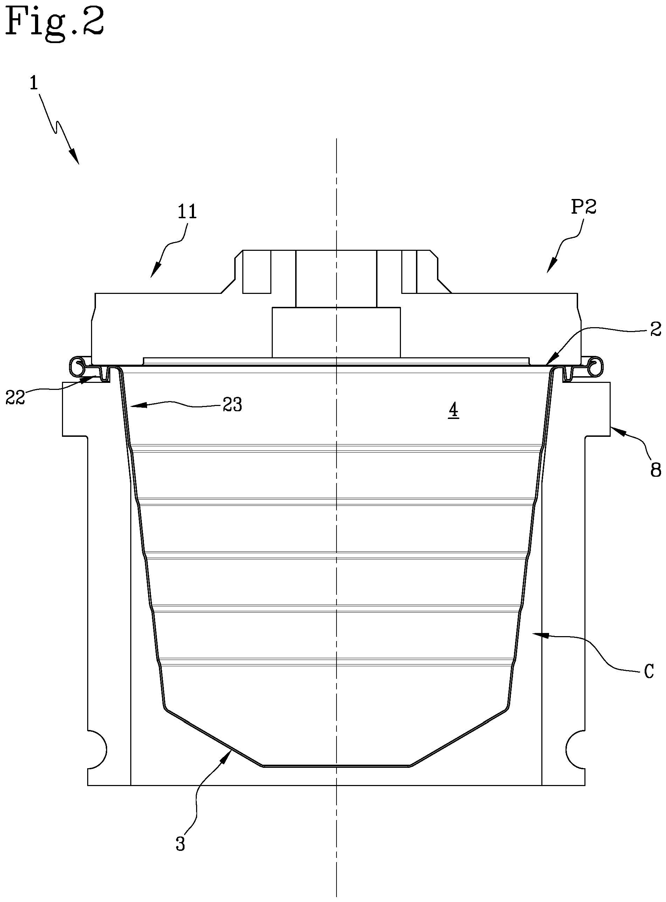

- Figures 1 and 2 are respective cross sections of the sealing apparatus according to the invention, in two different configurations;

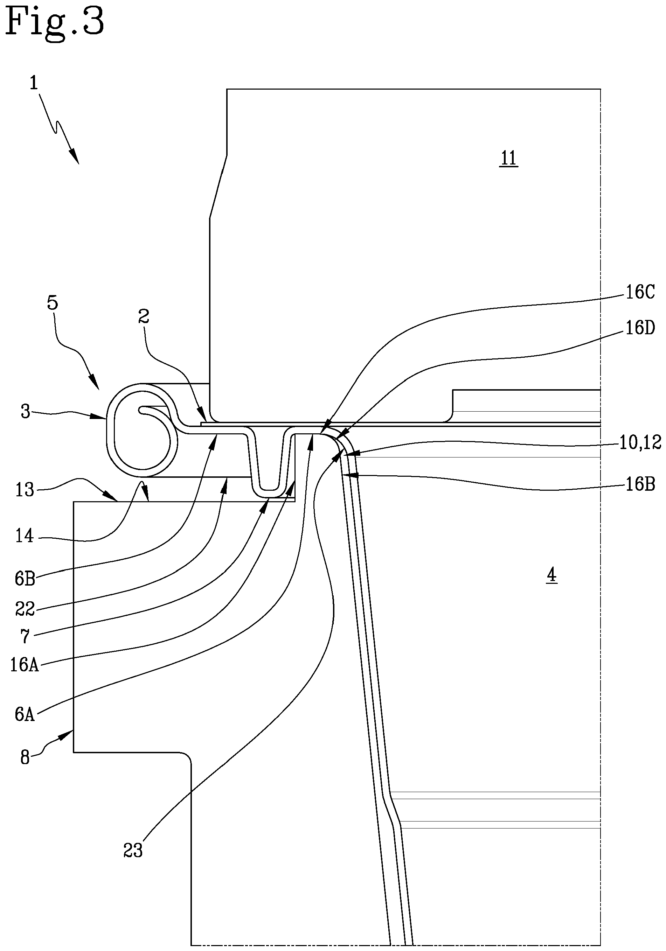

- Figure 3 shows an enlarged view of a detail of the sealing apparatus according to the preceding drawings;

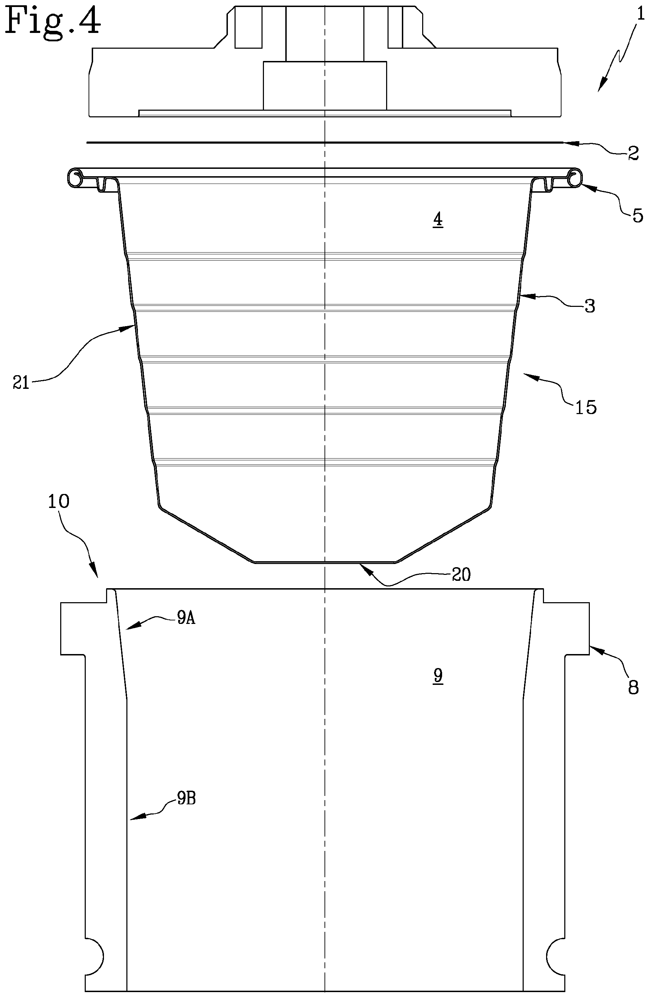

- Figure 4 is an exploded view of the sealing apparatus according to this invention;
- Figure 5 schematically illustrates a capsule production line, in which the sealing apparatus according to this invention is used.

This invention relates to an apparatus 1 for sealing the lid 2 to a capsule 3, for beverages, containing a beverage ingredient in powder form (e.g. extraction or infusion products). These products may be, for example: coffee, tea, etc.

The capsule 3 has the shape of a cup-shaped body 15.

The cup-shaped body 15 has a base 20 at one end and a side wall 21 which extends from the base 20 towards an opposite end which is open to form a mouth of the cup-shaped body 15 which is closed by a lid 2.

The cup-shaped body 15 and the lid 2 enclose a chamber 4 designed to be filled with beverage ingredients (e.g. extraction or infusion products).

The side wall 21 of the cup-shaped body 15 comprises a flange 5 which extends outwards at one end of the capsule distal from the base 20, protruding radially towards the outside of the chamber 4, said flange 5 having an inner ring 6A closer to the chamber 4 and away from the side wall 21 and an outer ring 6B further from the chamber 4 and coplanar with the inner ring 6A, separated by a protruding portion 7.

Preferably, the capsule 3, that is, the cup-shaped body 15, has a shape tapered from the top downwards.

According to an aspect not illustrated, the capsule 3 may house, inside it, one or more filters which have the purpose of retaining the product during the extraction / infusion step.

The term "ring" means a portion defined by a circular crown.

According to one aspect, the apparatus 1 comprises a capsule housing body 8, configured to house the cup-shaped body 15.

Preferably, the capsule housing body 8 is made of a metallic material. The housing body 8 has a cavity 9 for housing the cup-shaped body 15, and an upper annular contact portion 10 configured for supporting the capsule body 3 from the flange 5 when the cup-shaped body 15 is received in the housing cavity 9.

It should be noted that the housing cavity 9 is shaped to match the cup-shaped body 15.

In particular, the cavity 9 has a conical upper portion 9A and a cylindrical lower portion 9B.

According to another aspect, the apparatus 1 comprises a sealing device 11.

The sealing device 11, preferably heat sealing, is movable relative to the body 8 for housing the capsule between a non-operating position P1, spaced from the body 8 for housing the capsule, and an operating position P2, in contact with the upper contact portion 10 of the body 8 for housing the capsule with said lid 2 and said flange 5 interposed (between the body 8 and the sealing device 11).

According to one aspect, the sealing device 11 comprises an annular sealing portion 17 configured to make contact with the lid in a zone corresponding to the inner ring 6A and the outer ring 6B of the capsule 3 when the sealing is performed. It should be noted that, according to one aspect, the outer ring 6B is not supported in the lower part when the sealing device 11 seals the lid 2 to the inner ring 6A and to the outer ring 6B.

According to the invention, the upper annular contact portion 10 consists of a single upper annular projection 12 having a coupling face 16C configured and sized to receive in contact exclusively the inner ring 6A of the flange 5, so that there is no free space between the inner ring 6A of the flange 5 and the capsule housing body 8, when the cup-shaped body 15 is housed in the housing cavity 9 of said housing body 8.

Moreover, according to the invention, the capsule housing body 8 is configured and shaped to make the outer ring 6B free from any contact with respect to the capsule housing body 8, in such a way that there is an annular empty space 22 between the outer ring 6B of the flange 5 and the capsule housing body 8, when the cup-shaped body 15 is housed in the housing cavity 9 of said housing body 8.

The term "exclusively" is used in this description to indicate that the contact between the capsule body 3 and the housing body 8 occurs only at the upper annular protrusion 12, in particular only at the inner ring 6A. According to another aspect of the invention, the capsule housing body 8 comprises an outer portion 13, positioned radially towards the outside with respect to said annular (upper) protrusion 12.

The outer portion 13 lies on a horizontal plane 14.

Preferably, said protrusion 12 extends mainly along a direction at right angles to the horizontal plane 14.

According to another aspect, the upper protrusion 12 extends from an inner edge of the housing cavity 9.

According to one aspect, the upper annular protrusion 12 comprises a vertical wall 16B and a further vertical wall 16A.

The further vertical wall 16A is circular and outside the housing cavity 9. According to one aspect, the coupling face 16C connects the two vertical walls 16A, 16B of the upper annular protrusion 12.

In short, the coupling face 16C defines a third wall 16C which connects the first wall 16A to the second wall 16B.

The coupling face 16C is configured to make contact with the inner ring 6A of the capsule 3.

The coupling face 16C is a substantially flat annular wall.

According to one aspect, the coupling face 16C of the upper annular protrusion 12 extends from an inner side wall 23 of the housing cavity 9, in such a way that a vertical wall 16B of the upper annular protrusion 12 coincides with the above-mentioned inner side wall 23.

It should be noted that between the radially internal vertical wall 16B and the coupling face (that is, wall) 16C there is a connecting portion 16D. According to another aspect, preferably, the coupling face 16C of the upper annular protrusion 12 has a width which is substantially equal to the width of the inner ring 6A of the flange 5.

According to another aspect, the inner side wall 23 of the housing cavity 9 is inclined.

According to yet another aspect, the sealing device 11 comprises a portion 17 for sealing and contact of the lid 2, configured to seal the lid 2 to the capsule body 3.

According to another aspect, said sealing occurs in a zone corresponding to the upper annular protrusion 12 (that is, in a zone corresponding to the coupling face 16C).

According to yet another aspect, said sealing occurs at least in a zone corresponding to the inner ring 6A of the capsule body 3.

According to yet another aspect, said sealing occurs in a zone corresponding to the inner ring 6A and the outer ring 6B of the capsule body 3.

The sealing portion 17 is, preferably, an annular portion.

It should be noted, advantageously, that, thanks to the apparatus 1, and in particular the resting of the capsule 3 only at the inner ring 6A, the risk of soiling the supporting zone with coffee powder is substantially reduced, so as not to require a regular cleaning as was the case, on the other hand, in the prior art solutions.

Advantageously, the apparatus 1 according to the invention therefore allows the lid 2 to be sealed to the capsule 3 in such a way as to guarantee a perfect and optimum sealing, thus reducing the risk of imperfect sealing.

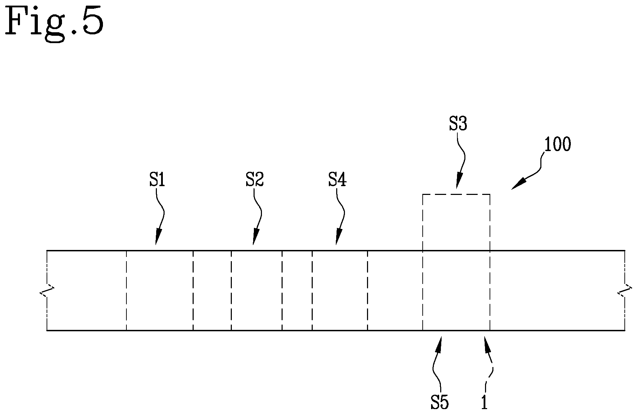

As illustrated in Figure 5, a machine 100 is defined for making capsules 3 for beverages containing a beverage ingredient in powder form and having a cup-shaped body 15, the above-mentioned machine comprising:
- a first feed station S1 for feeding the cup-shaped bodies 15;
- a filling station S2 for filling the cup-shaped bodies 15 with the beverage ingredient;
- a second feed station S3 for feeding lids 2;
- a weighing station S4 for weighing the beverage bodies 3 filled with the beverage ingredient;
- a sealing station S5 for sealing the lids 2 to the above-mentioned cup-shaped bodies 15.

The invention also defines a method for sealing a lid 2 to a capsule 3 for beverages containing a beverage ingredient in powder form, the above-mentioned capsule 3 for beverages having the form of a cup-shaped body 15 having a base 20 at one end and a side wall 21 which extends from the base 20 towards an opposite end which is open to form a mouth of the cup-shaped body 15, the cup-shaped body 15 being closed by a lid 2.

It should be noted that the cup-shaped body 15 and the lid 2 enclose a chamber to be filled with the beverage ingredient.

The side wall 21 of the cup-shaped body 15 comprises a flange extending outwards 5 at one end of the capsule 3 away from the base 20, which protrudes radially and outwards from the chamber 4.

The above-mentioned flange 5 has an inner ring 6A further inside the chamber 4 and which moves away from the side wall 21 of the cup-shaped body 15, and an outer ring 6B further outside the chamber 4 and coplanar with the inner ring 6A, separated by a protruding portion 7.

According to the invention, the method comprises the following steps:
- providing a body 8 for housing the capsule having a housing cavity 9 to receive the cup-shaped body 15, and an upper annular coupling portion 10 configured to support the body of the capsule 3 by means of the flange 5, when the cup-shaped body 15 is received in the housing cavity 9;
- providing a sealing device 11, preferably for heat sealing, which is movable relative to the capsule housing body 8;
- positioning the cup-shaped body 15 inside the housing cavity 9;
- placing a lid 2 on the flange 5 of the cup-shaped body 15 for covering the chamber 4; then,
- moving the sealing device 11 from a non-operating position P1 away from the capsule housing body 8 to an operating position P2 in contact with the upper annular coupling portion 10 of the capsule housing body 8 with the above-mentioned lid 2 and the above-mentioned flange 5 interposed between them;
- sealing the lid 2 to the body of the capsule 3 by means of the sealing device 11.

According to the invention, the upper annular coupling portion 10 consists of a single upper annular projection 12 having a coupling face 16C configured and sized to receive in contact only the inner ring 6A of the flange 5, in such a way that there is no free space between the inner ring 6A of the flange 5 and the above-mentioned body for housing the capsule 8, when the cup-shaped body 15 is received in the housing cavity 9 of the above-mentioned housing body 8.

According to the method, the step of positioning the cup-shaped body 15 inside the housing cavity 9 comprises positioning exclusively the inner ring 6A of the flange 5 which comes into contact with the coupling face 16C of the single upper annular protrusion 12 of the above-mentioned upper annular coupling portion 10, ensuring that exclusively the inner ring 6A of the flange is in contact with the above-mentioned single upper annular protrusion 12, and wherein the above-mentioned single upper annular protrusion 12 is sized to come into contact only with the inner ring 6A of the flange 5, when the cup-shaped body 15 of the above-mentioned capsule body 3 is received in the housing cavity 9 of the above-mentioned housing body 8, in such a way that the outer ring 6B of the flange 5 does not come into contact with the above-mentioned housing body 8, so as to create an empty annular space 22 between the outer ring 6B of the flange 5 and the above-mentioned housing body 8 of the capsule, when the cup-shaped body 15 is received in the housing cavity 9 of the above-mentioned housing body 8.

In other words, advantageously, according to the method, the cup-shaped body 15, inserted inside the cavity 9 of the housing body 8, rests only on the housing body 8 (more precisely on the upper annular protrusion 12), at the inner ring 6A.

According to another aspect, the above-mentioned step of sealing the lid 12 to the capsule body 3 comprises a step of sealing the lid 2 to the capsule body 3 (in particular to the cup-shaped body 15) simultaneously at the region including the inner ring 6A and the outer ring 6B.

According to another aspect, the step of sealing the lid 2 to the body of the capsule 3 comprises sealing of the lid 2 both on the inner ring 6A and on the outer ring 6B. According to this aspect, preferably, the sealing of the outer ring 6B is performed without any support in the lower part. According to another aspect, the sealing method comprises, after the step of placing a lid 2 on the flange 5 of the body of the capsule 3 and before the step of sealing the lid 2 to the capsule 3 by means of the sealing device 11, a step of punctiform sealing, in a plurality of points, the lid 2 resting on the capsule body 3.

Advantageously, this ensures that the lid 2 is firmly secured relative to the capsule 3 when the sealing device 11 is activated, that is to say, when the sealing device 11 is moved to the second position P2 (for sealing).

It should be noted that, advantageously, the method according to the invention allows the sealing to be performed in a region which is certainly not affected by coffee powder.

Consequently, the method proposed makes it possible to seal the lid 2 to the capsule 3 in such a way as to guarantee a perfect and optimum sealing, thus reducing the risk of imperfect sealing.

## Claims

1. An apparatus (1) for sealing a lid (2) to a beverage capsule (3) containing a beverage ingredient in powder form, said beverage capsule (3) has a form of a cup-shaped body (15) having a base (20) at one end and a side wall (21) extending from the base (20) towards an opposite end which is open to form a mouth of the cup-shaped body (15) which is closed-off by a lid (2), the cup-shaped body (15) and the lid (2) enclosing a chamber (4) to be filled with the beverage ingredient, wherein the side wall (21) of the cup-shaped body (15) comprises an outwardly-extending flange (5) at an end of the capsule (1) distal the base (20), protruding radially and outwardly from the chamber (4), said flange (5) having an inner ring (6A) innermost to the chamber (4) and departing from the side wall (21) of the cup-shaped body (15), and an outer ring (6B) outermost the chamber (4) and coplanar to the inner ring (6A), separated by a protruding portion (7); the apparatus (1) comprising:
- a capsule housing body (8) having a housing cavity (9) configured to receive the cup-shaped body (15), and an upper annular abutting portion (10) configured to support the capsule (3) from the flange (5), when the cup-shaped body (15) is received into the housing cavity (9);
- a sealing device (11), preferably heat sealing, movable with respect to the capsule housing body (8) between a non-operational position (P1), distal from the capsule housing body (8), and an operational position (P2), in contact with the upper annular abutting portion (10) of the capsule housing body (8), with said lid (2) and said flange (5) interposed therebetween; the apparatus (1) being **characterized in that** the upper annular abutting portion (10) consists of a single upper annular protrusion (12) having an engaging face (16C) configured and dimensioned to receive in contact only the inner ring (6A) of the flange (5), so that there is no free space between the inner ring (6A) of the flange (5) and said capsule housing body (8), when the cup-shaped body (15) is received into the housing cavity (9) of said housing body (8), and **in that** the capsule housing body (8) is configured and shaped to free the outer ring (6B) from any contact with respect to said capsule housing body (8), so that there is an annular void space (22) between the outer ring (6B) of the flange (5) and said capsule housing body (8), when the cup-shaped body (15) is received into the housing cavity (9) of said capsule housing body (8).

2. The apparatus (1) according to the preceding claim, wherein the sealing device (11) comprises an annular sealing portion (17) shaped and configured to contact the lid (2) both at the inner ring (6A) and at the outer ring (6B) when it operates the sealing, wherein the outer ring (6B) is not supported underneath when the sealing device (11) seals the lid (2) to the inner (6A) and outer (6B) ring.

3. The apparatus (1) according to claim 1 or 2, wherein the engaging face (16C) of the upper annular protrusion (12) departs form an inner lateral wall (23) of the housing cavity (9), so that a vertical wall (16B) of the upper annular protrusion (12) coincides with said inner lateral wall (23).

4. The apparatus (1) according to claim 3, wherein the upper annular protrusion (12) comprises a further vertical wall (16A) which is circular and external to the housing cavity (9), the engaging face (16C) connecting the two vertical walls (16A, 16B) of the upper annular protrusion (12).

5. The apparatus (1) according to any of the preceding claims, wherein the engaging face (16C) of the upper annular protrusion (12) has a width which is substantially equal to the width of the inner ring (6A) of the flange (5).

6. The apparatus (1) according to claim 4 or 5, wherein the inner lateral wall (23) of the housing cavity (9) is skewed.

7. The apparatus (1) according to any one of the claims 4 - 6, wherein the engaging face (16C) is an annular wall substantially flat.

8. The apparatus (1) according to any one of the preceding claims, wherein the capsule housing body (8) comprises an outer portion (13) radially disposed outwardly with respect to said upper annular protrusion (12).

9. The apparatus (1) according to the preceding claim, wherein said radially outer portion (13) lies on a horizontal plane (14).

10. A machine (100) for making beverage capsules (3) containing a beverage ingredient in powder form and having a form of cup-shaped bodies (15), said machine comprising:
- a first feed station (S1) for feeding said cup-shaped bodies (15);
- a filling station (S2) for filling said cup-shaped bodies (15) with the beverage ingredient;
- a second feed station (S3) for feeding lids (2);
- a weighing station (S4) for weighing the beverage bodies (3) filled with the beverage ingredient;
- a sealing station (S5) for sealing the lids (2) to said cup-shaped bodies (15), said sealing station (S5) comprising the apparatus (1) according to any of the preceding claims.

11. A method for sealing a lid (2) to a beverage capsule (3) containing a beverage ingredient in powder form, said beverage capsule (3) has a form of a cup-shaped body (15) having a base (20) at one end and a side wall (21) extending from the base (20) towards an opposite end which is open to form a mouth of the cup-shaped body (15) which is closed-off by a lid (2), the cup-shaped body (15) and the lid (2) enclosing a chamber (4) to be filled with the beverage ingredient, wherein the side wall (21) of the cup-shaped body (15) comprises an outwardly-extending flange (5) at an end of the capsule (3) distal the base (20), protruding radially and outwardly from the chamber (4), said flange (5) having an inner ring (6A) innermost to the chamber (4) and departing from the side wall (21) of the cup-shaped body (15), and an outer ring (6B) outermost the chamber (4) and coplanar to the inner ring (6A), separated by a protruding portion (7), the method comprising the following steps:
- providing a capsule housing body (8) having a housing cavity (9) for receiving the cup-shaped body (15), and an upper annular abutting portion (10) configured to support the capsule body (3) from the flange (5), when the cup-shaped body (15) is received into the housing cavity (9);
- providing a sealing device (11), preferably heat sealing, movable with respect to the capsule housing body (8);
- placing the cup-shaped body (15) of the capsule body (3) within the housing cavity (9) of the capsule housing body (8);
- lying a lid (2) on the flange (5) of the capsule body (3) to cover the chamber (4); subsequently:
- moving the sealing device (11) from a non-operational position (P1) distal from the capsule housing body (8) to an operational position (P2) in contact with the upper annular abutting portion (10) of the capsule housing body (8), with said lid (2) and said flange (5) interposed therebetween;
- sealing the lid (2) to the capsule body (3) by means of the sealing device (11),
the method being **characterized in that** the upper annular abutting portion (10) consists of a single upper annular protrusion (12) having an engaging face (16C) configured and dimensioned to receive in contact only the inner ring (6A) of the flange (5), so that there is no free space between the inner ring (6A) of the flange (5) and said capsule housing body (8), when the cup-shaped body (15) is received into the housing cavity (9) of said housing body (8), wherein said step of placing the cup-shaped body (15) of said capsule body (3) within the housing cavity (9) of the capsule housing body (8) comprises arranging only the inner ring (6A) of the flange (5) of said capsule body (3) abutting on said engaging face (16C) of said single upper annular protrusion (12) of said upper annular abutting portion (10), ensuring that only the inner ring (6A) of the flange is in contact with said single upper annular protrusion (12), and wherein said single upper annular protrusion (12) is dimensioned to contact only the inner ring (6A) of the flange (5), when the cup shaped body (15) of said capsule body (3) is received in the housing cavity (9) of said housing body (8), so that the outer ring (6B) of the flange (5) does not come in contact with said housing body (8), so that there is an annular void space (22) between the outer ring (6B) of the flange (5) and said capsule housing body (8), when the cup-shaped body (15) is received into the housing cavity (9) of said capsule housing body (8).

12. The sealing method according to the preceding claim, wherein said step of sealing the lid (2) to the capsule body (3) comprises sealing the lid (2) to the capsule body (3) both on the inner ring (6A) and the outer ring (6B), wherein the sealing of the outer ring (6B) is carried out without any support underneath.
